# FASCICULE DE BREVET EUROPEEN

(11) **EP 4 214 034 B1**
(45) Date de publication et mention de la délivrance du brevet: **11.09.2024**
(21) Numéro de dépôt: 21793977.6
(22) Date de dépôt: 20.09.2021
(51) Int. Cl.: B29B 15/12

(54) **INSTALLATION D'IMPREGNATION DE POUDRE D'AU MOINS UN SUPPORT A TRAITER DE TYPE FIL ET/OU RUBAN**
ANLAGE ZUR PULVERIMPRÄGNIERUNG VON MINDESTENS EINEM ZU BEHANDELNDEN GARN- UND/ODER BANDFÖRMIGEN SUBSTRAT
FACILITY FOR POWDER IMPREGNATION OF AT LEAST ONE YARN AND/OR RIBBON TYPE SUBSTRATE TO BE TREATED

(30) Priorité: 21.09.2020 FR 2009532
(43) Date de publication de la demande: 26.07.2023
(73) Titulaire: Fibroline, 69760 Limonest (FR)
(72) Inventeur: MARDUEL, Joric, 69380 CHAZAY D'AZERGUES (FR); BOUZOUITA, Sofien, 69160 TASSIN LA DEMI LUNE (FR); DEDIEU, Marc, 69380 LES CHERES (FR)
(74) Mandataire: Cabinet Laurent & Charras
(86) Numéro de dépôt international: PCT/FR2021/051602
(87) Numéro de publication internationale: WO 2022/058696

(56) Documents cités:
- EP-A1- 1 526 214
- EP-A1- 2 331 309

## Description

### Domaine technique

L'invention se rattache au domaine de l'imprégnation de supports poreux par des matériaux pulvérulents.

L'invention concerne en particulier une installation d'imprégnation de poudre sur au moins un support à traiter de type fil et/ou ruban.

L'invention trouve de multiples applications dans de nombreux domaines, en fonction du type de support et de la poudre utilisée.

A titre d'exemple, on peut citer la réalisation de bandages imprégnés d'une poudre antibactérienne, dans le domaine médical, ou l'imprégnation d'une poudre thermoplastique dans des fils de fibres de verre pour du renforcement mécanique

### Technique antérieure

L'imprégnation d'un support poreux par une poudre permet avantageusement d'en modifier les propriétés. Pour ce faire, différentes techniques peuvent être employées. De manière générale, ces techniques consistent à faire pénétrer la poudre dans les pores du support par l'intermédiaire d'un dispositif mécanique, pneumatique, électrostatique, ou par le biais de solvants ...

Le brevet EP 2 331 309 du Demandeur décrit une installation d'imprégnation d'un support poreux comprenant deux électrodes situées en regard l'une de l'autre et aptes à produire un champ électrique alternatif au niveau de l'espace localisé entre ces deux électrodes. Le support et la poudre sont confinés entre deux convoyeurs aptes à transporter le support et la poudre jusqu'à l'espace localisé entre les deux électrodes. Sous l'effet du champ électrique généré par les électrodes, la poudre est mise en mouvement de manière quasi aléatoire dans toutes les directions. La poudre pénètre ainsi au sein des pores du support pour l'imprégner dans toute son épaisseur, idéalement de manière homogène. Une telle installation permet avantageusement de confiner la poudre en mouvement et d'en limiter les pertes.

Cependant, une telle installation est prévue pour des supports de grande largeur, typiquement entre 0,5m et 6 m. Elle n'est donc pas adaptée pour des supports aux dimensions plus réduites, c'est-à-dire des fils ou des rubans. De plus, les dimensions de l'installation étant nettement supérieures à celles d'un support de type fil ou ruban, la poudre aurait une probabilité faible de pénétrer dans le support qui représente un faible volume par rapport à l'applicateur électrostatique et la répartition de la poudre au sein du support ne serait pas homogène. En outre, la faible dimension des supports de type « fil » ou « ruban » ne permet pas de déposer la poudre préalablement à leur surface par les techniques de poudrages de l'art antérieur.

En outre, la miniaturisation d'une telle installation s'avérerait complexe et peu avantageuse. En effet, pour des convoyeurs plus étroits, la probabilité que la poudre s'échappe de l'espace de confinement formé par les convoyeurs augmente nettement. Ainsi, une grande quantité de poudre serait gaspillée comparativement à la quantité de poudre qui imprégnerait les fils et/ou rubans.

Dans les installations de l'art antérieur, une fraction de la poudre qui a été mise en mouvement n'est pas imprégnée dans la matière poreuse et vient se déposer sur les convoyeurs qui sont disposés au-dessus et en dessous de la matière et qui permettent en sortie d'installation de récupérer cette poudre non imprégnée. Le traitement d'un fils ne serait pas compatible avec cette configuration car les convoyeurs ne font pas la largeur d'un fil. Le traitement d'un fil dans une installation classique entraine donc une perte de poudre importante sur les convoyeurs dont la surface est bien supérieure aux fils ou aux rubans.

Le problème technique que se propose de résoudre l'invention est de mettre au point une installation permettant d'imprégner de manière homogène des supports aux dimensions plus réduites que les supports de l'état de l'art, tels que des rubans ou des fils, tout en limitant le gaspillage de poudre et sans passer par une étape préalable de dépôt de poudre en surface des supports poreux.

### Résumé de l'invention

Pour répondre à ce problème, le Demandeur a mis au point une installation d'imprégnation de poudre sur au moins un support à traiter de type fil et/ou ruban comprenant :
- un organe de délivrance de la poudre;
- un organe d'alimentation du support à traiter ;
- au moins deux électrodes reliées à un générateur de courant alternatif et aptes à créer un champ électrique alternatif au niveau de l'espace formé entre lesdites électrodes ; et
- une zone de circulation de la poudre et du support à traiter s'étendant au moins dans la zone où règne le champ électrique alternatif.

Une telle installation est caractérisée en ce que :
- l'installation d'imprégnation comporte en outre un organe de confinement présentant un orifice d'entrée du support à traiter et de la poudre, un orifice de sortie du support imprégné et une section de contour fermé depuis l'orifice d'entrée jusqu'à l'orifice de sortie ; la zone de circulation étant formée par le volume intérieur dudit organe de confinement ; et
- l'organe de confinement est fixe par rapport à au moins une des électrodes ; le support à traiter et la poudre étant mobiles, dans la zone de circulation, entre l'orifice d'entrée et l'orifice de sortie dudit organe de confinement.

En d'autres termes, le Demandeur a mis au point une installation d'imprégnation de fils et/ou de rubans dans laquelle le support et la poudre circulent au sein d'un organe de confinement fixe, typiquement un tube. De manière avantageuse, l'installation d'imprégnation selon l'invention ne requiert pas l'utilisation de convoyeurs pour déplacer le support au sein de l'organe de confinement. De plus, par rapport aux installations de l'état de l'art, les organes d'alimentation doivent mettre en mouvement le support, et donc le soumettre à une certaine tension, ce qui peut avoir pour effet de réduire la taille des pores du support à traiter. De manière inattendue, le support imprégné présente cependant une imprégnation homogène comparable à celle des installations de l'état de l'art.

En pratique, une portion de l'organe de confinement dépasse de l'espace formé entre les électrodes de sorte à permettre la mise en contact de la poudre et du support à traiter avant l'application du champ électrique mettant la poudre en mouvement. Ainsi, la poudre est au plus proche du support, avantageusement, déposée à sa surface. La distance à parcourir par la poudre, avant de pénétrer dans les pores du support, est ainsi réduite. Ceci permet à la poudre de pénétrer plus profondément au sein du support. De même, l'intensité du champ électrique nécessaire pour mettre en mouvement la poudre peut être réduite afin d'économiser de l'énergie.

En pratique, le champ électrique appliqué le champ électrique appliqué sur la poudre doit permettre le déplacement de celui-ci à l'intérieur de l'organe de confinement. Ainsi, par champ alternatif, on entend un champ électrique qui n'est pas strictement continu, mais qui présente une composante variable dans le temps. Cette composante variable peut potentiellement s'ajouter à une composante continue, par exemple lorsque le champ résulte de l'application d'un potentiel entre électrodes issu du redressement d'un potentiel sinusoïdal.

De manière générale, l'installation comprend deux électrodes placées en regard l'une de l'autre, de manière à générer un champ électrique à l'extérieur de l'organe de confinement, et qui traverse ce dernier.

Dans certains cas, et notamment lorsque le support est en un matériau conducteur, le support forme l'une des deux électrodes et est relié au générateur électrique. Le champ électrique est alors créé entre la ou les électrodes externes à l'organe de confinement, et le support si tué à l'intérieur de l'organe de confinement.

L'organe de confinement peut adopter des géométries différentes sans changer l'invention. En particulier, l'organe de confinement est un tube de section circulaire.

En variante, l'organe de confinement est un tube de section oblongue. Ou encore, l'organe de confinement est un tube de section rectangulaire. Pour ces deux derniers cas de figure, la géométrie de l'organe de confinement a pour effet de concentrer le champ électrique produit par les électrodes. Les particules de poudre acquièrent ainsi une vitesse plus importante permettant de pénétrer plus profondément au sein du support. A niveau de tension appliquée égal, l'installation de ce type permet donc une meilleure imprégnation que sur les installations de l'art antérieur. Ainsi, le rendement est plus élevé et la profondeur d'imprégnation est plus importante grâce à l'organe de confinement. Cet organe de confinement permet donc des installations plus compactes, et des vitesses de traitement plus élevées.

Selon un autre mode de réalisation, l'organe de confinement présente au moins deux portions de section différente.

Une première portion présente une section, ou dans le cas d'un tube circulaire, un diamètre réduit. Cette première portion dépasse typiquement en amont de l'espace formé entre les électrodes. Elle permet avantageusement de réduire l'espace libre dans lequel la poudre peut bouger de sorte à concentrer la poudre à proximité du support. Cette configuration est particulièrement pertinente dans le cas d'une installation verticale, car elle permet de limiter la chute de la poudre dans l'espace libre le long de la matière à imprégner.

Une seconde portion présente une section plus grande que la première portion. Cette seconde portion est disposée entre les électrodes et est soumise à un champ électrique. Le diamètre plus large que la première portion permet à la poudre de se mouvoir quasi aléatoirement dans toutes les directions et de pénétrer de manière homogène au sein des pores du support. Dans cette section, un espace libre autour de la matière n'est pas gênant car la poudre est principalement soumise aux forces électrostatiques plutôt qu'à la gravité. Cette section plus importante est même favorable pour bien libérer la poudre qui pourrait être coincée entre l'organe de confinement et la matière poreuse à imprégner.

De façon inattendue, il a été constaté, en particulier avec cette configuration, que la seconde section plus grande, favorisait le gonflement des fibres sous l'action du champ électrique alternatif et, de cette manière, augmentait la porosité du support fibreux. L'homogénéité d'imprégnation de la poudre dans le réseau fibreux est ainsi améliorée, de même que le rendement d'imprégnation, c'est-à-dire la quantité de poudre imprégnée par rapport à la quantité de poudre déposée.

La configuration des électrodes placées en regard l'une de l'autre est équivalente à un condensateur de capacité déterminée. A épaisseur de matériau constante, placer un organe de confinement réalisé dans un matériau dont la permittivité diélectrique et plus élevée que celle de l'air permet d'augmenter la capacité du condensateur formé par les électrodes. Or, plus la capacité du condensateur augmente, plus le champ électrique présent dans la zone de circulation est élevé pour une même tension électrique appliquée aux électrodes et plus la poudre acquiert une vitesse plus élevée sans consommation d'énergie supplémentaire. Maximiser la permittivité diélectrique du matériau composant l'organe de confinement permet ainsi d'augmenter la capacité du condensateur formé par les électrodes et d'améliorer l'efficacité du dispositif.

En particulier, l'organe de confinement est réalisé dans un matériau dont la permittivité diélectrique relative est supérieure ou égale à 2, ce qui permet de maximiser l'impact de l'organe de confinement sur le champ électrique appliqué aux particules de poudre.

Selon un mode de réalisation préférentiel, l'organe de confinement est réalisé dans un matériau dont la permittivité diélectrique relative est supérieure à 5, et notamment les matériaux compris dans le groupe comprenant le verre, le quartz ou la céramique.

De manière avantageuse, l'organe de confinement est orienté verticalement. De cette manière, la poudre qui n'a pas pénétré dans les pores, et qui est restée en surface du support tombe naturellement, sous l'effet de la gravité, dans un contenant prévu à cet effet sous l'installation. Dans certaines applications, il peut être également possible d'appliquer dans certaines parties de l'installation un champ électrique essentiellement continu, permettant par exemple de couvrir le support préalablement traité avec un champ alternatif ayant assuré l'imprégnation de la poudre.

### Description sommaire des figures

D'autres avantages et caractéristiques de l'invention apparaitront à la lecture de la description suivante, donnée à titre d'exemple illustratif et non limitatif en référence aux figures annexées suivantes.
[Fig1] La figure 1 est une vue en perspective sommaire d'une installation d'imprégnation par transfert de poudre selon un mode de réalisation de l'invention,
[Fig2] La figure 2 est une vue en coupe verticale de l'installation de la figure 1, au niveau de l'organe de confinement.
[Fig3a] La figure 3a est une vue en coupe longitudinale médiane d'un premier mode de réalisation de l'organe de confinement.
[Fig3b] La figure 3b est une vue en coupe longitudinale médiane d'un deuxième mode de réalisation de l'organe de confinement.
[Fig3c] La figure 3c est une vue en coupe longitudinale médiane d'un troisième mode de réalisation de l'organe de confinement.
[Fig4] La figure 4 est un graphique de la valeur du champ électrique le long d'un axe passant par le centre des électrodes en l'absence d'organe de confinement.
[Fig5] La figure 5 est un graphique analogue à celui de la figure 4, en présence d'un organe de confinement de forme oblongue.

### Manières possibles de réaliser l'invention

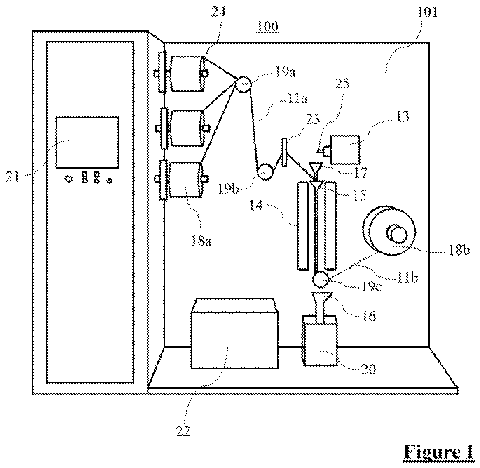

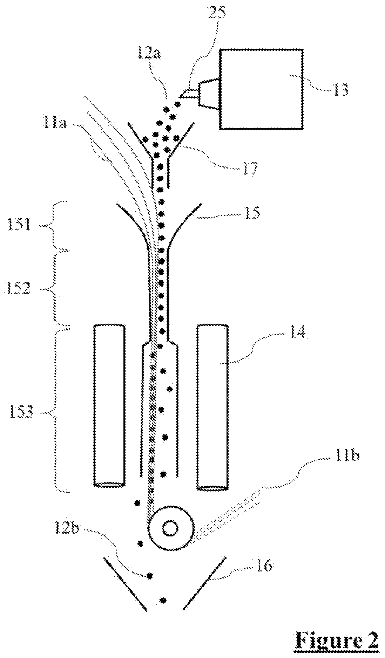

Tel qu'illustré sur les figures 1 et 2, une installation d'imprégnation **100** comporte un châssis **101** sur lequel sont fixés des organes d'alimentation du support à traiter **11a**, des organes d'alimentation en poudre **12a** et le système permettant de réaliser l'imprégnation à proprement parler.

L'installation d'imprégnation **100** est alimentée par un générateur de tension alternative **22** permettant de délivrer des tensions de l'ordre de quelques milliers à quelques dizaines de milliers de Volts. Le générateur de tension alternative **22** permet en particulier d'alimenter deux électrodes **14,** disposées en regard l'une de l'autre. Les électrodes **14** sont disposées à la verticale, espacées d'une distance comprise entre 5 et 20mm. Chaque électrode **14** est connectée à l'une des deux bornes du générateur **22.** D'autres modes de réalisations sont envisageables, dans lesquels les électrodes **14** sont disposées à l'horizontale. D'autre géométries d'électrodes sont bien sûr possible mais doivent permettre de générer un champ électrique alternatif intense sur l'organe de confinement. Dans certains cas, le support peut être conducteur, et devra dans ce cas être mise à la terre électriquement. Dans ce cas, la géométrie et le raccordement électrique des électrodes pourront être adaptés afin d'obtenir à nouveau un champ électrique alternatif dans l'environnement de l'organe de confinement.

Les électrodes **14** génèrent un champ électrique au niveau de l'espace formé entre elles. Un organe de confinement **15** est disposé entre les électrodes **14.** L'organe de confinement **15** est alimenté en poudre **12a** et en support à traiter **11a**.

Les organes d'alimentation en support à traiter **11a** incluent des mandrins **24** sur lesquels le support à traiter **11a** est conditionné sous forme de bobines **18a.** Les organes d'alimentation incluent également des rouleaux de renvoi **19a-19b** permettant d'acheminer le support à traiter **11a**, depuis les bobines **18a,** jusqu'à la zone d'imprégnation et un peigne **23** permettant de séparer les différents fils et/ou rubans composant le support à traiter **11a**. En pratique, le support à traiter **11a** peut être composé uniquement de fils, de fils assemblés ou uniquement de rubans ou un mélange des plusieurs types de supports **11a**.

Les organes d'alimentation en poudre **12a** incluent un réservoir de poudre **13.** La poudre **12a** est délivrée dans un entonnoir **17,** depuis le réservoir de poudre **13,** au moyen d'une vis sans fin **25.** La vis sans fin **25** permet de générer un débit régulé et régulier de poudre **12a,** sans grumeaux. La vitesse de délivrance de la poudre **12a** peut être modifiée en réglant la vitesse de rotation de la vis sans fin **25.**

Le support imprégné **11b** est extrait de l'organe de confinement **15** par les organes d'extraction du support imprégné **11b.** Les organes d'extraction **19c, 18b** incluent un rouleau de renvoi **19c** et une bobine de renvidage **18b** permettant de stoker le support imprégné **11b**.

En pratique, le flux de poudre est optimisé pour minimiser les pertes de poudre **12b.** Les frottements du support **11a** contre les parois de l'organe de confinement **15** permettent de charrier le reste de poudre **12b** n'ayant pas pénétré dans le support **11a** jusqu'à l'extrémité inférieure de l'organe de confinement **15.** Ainsi, la poudre restante **12b** est extraite de l'organe de confinement **15** vers un second entonnoir **16** débouchant dans un bac de récupération **20.** Dans l'exemple illustré, la poudre tombe par gravité dans le bac de récupération **20.** En variante, dans une configuration horizontale de l'organe de confinement **15,** un convoyeur peut être utilisé pour déplacer la poudre depuis la sortie de l'organe de confinement jusqu'au bac de récupération **20.**

Le support à traiter **11a** peut correspondre à un fil de diamètre compris entre quelques microns et quelques centaines de microns. Selon un autre mode de réalisation, le support à traiter **11a** peut correspondre à un ruban ou une bande de largeur comprise entre 0.5 et 10 cm. Le support à traiter **11a** peut correspondre à tout matériau poreux, typiquement un fil multi filaments, un fil assemblé, un textile tissé, non-tissé, une tresse, un roving, et d'une façon générale tous matériaux poreux filiformes. Les matériaux comprennent l'ensemble des matières textiles classiques que ce soit les matières naturelles, synthétiques ou artificielles.

La poudre **12a** peut correspondre à des particules de diamètre depuis l'échelle nanométrique jusqu'à quelques centaines de microns. Par exemple, la poudre est constituée de particules de polymère thermoplastique ou thermodurcissable destinées à être fondues pour, après refroidissement, former la matrice d'un matériau composite renforcé par les fils et/ou rubans constituants le support. La poudre **12a** peut également correspondre à un principe actif, typiquement un agent antibactérien, un agent colorant, un agent anti-feu...

Tel qu'illustré sur la figure 2, le support à traiter **11a** et la poudre **12a** sont mis en contact l'un avec l'autre au niveau d'une portion supérieure **152** de l'organe de confinement **15.** Cette portion supérieure **152** présente un diamètre réduit, typiquement compris entre 1 et 10mm, permettant à la poudre **12a** d'être pressée contre le support à traiter **11a** afin de pénétrer dans l'organe de confinement de façon synchronisée avec le support. Le support à traiter **11a** et la poudre **12a** sont ensuite transportés jusqu'à une seconde portion **153** de l'organe de confinement **15,** dont le diamètre est plus large que la portion de diamètre réduit **152.** Cette portions **153** de l'organe de confinement **15** est positionnée entre les deux électrodes **14** et est soumise au champ électrique généré par ces électrodes **14.** La portion **153** forme une barrière au sein de laquelle la poudre **12a** en mouvement, est confinée et ne peut s'échapper. La poudre **12a** forme alors un nuage de particules en mouvement qui stagnerait au niveau de la portion **153** sans l'effet de traction réalisé par le support à traiter **11a**, en mouvement dans l'organe de confinement **15.** Dans cette portion **153,** les fibres ont tendance à se mettre en mouvement également, ce qui favorise leur gonflement en fonction de leur contexture et du champ électrique alternatif appliqué. Elles ont alors la faculté d'occuper tout l'espace de la section et entraine alors la poudre qui a pénétré dans le réseau poreux

Les particules de poudre **12a** sont polarisées. Ainsi, sous l'effet du champ électrique des électrodes **14,** les particules de poudre **12a** sont mise en mouvement aléatoire au sein de la portion **153** de l'organe de confinement **15.** La vitesse des particules de poudre **12a** est fonction croissante de l'intensité et de la fréquence du champ électrique. Plus ce champ est intense, plus les particules acquièrent une vitesse importante et plus elles peuvent pénétrer profondément au sein des pores du support à traiter **11a**. La fréquence peut être ajustée en fonction de la taille des particules de poudre. Avantageusement, les particules les plus grosses peuvent être soumises à des champs de fréquences plus basses pour leur laisser le temps de se mettre en mouvement en suivant les oscillations du champ électrique. Les fréquences sont généralement comprises entre quelques dizaines à quelques centaines de Hertz.

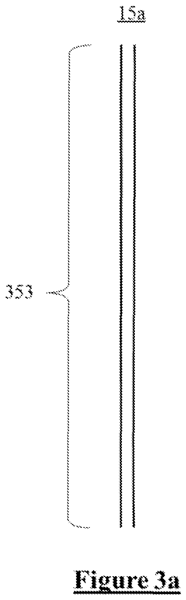

Tel qu'illustré sur les figures 3a à 3c, l'organe de confinement **15a-15c** peut adopter plusieurs géométries.

La figure 3a illustre un organe de confinement **15a** comportant une portion **353** de diamètre constant depuis l'orifice d'entrée jusqu'à l'orifice de sortie. Cette géométrie est adaptée au support poreux ayant une faible capacité de mise en mouvement et de gonflement des fibres.

Elle peut aussi être adaptée lorsque l'effet de la pénétration de la poudre dans le support poreux n'est pas très important et que le résultat recherché correspond à une localisation de la poudre plus en surface et moins à coeur d'un réseau poreux.

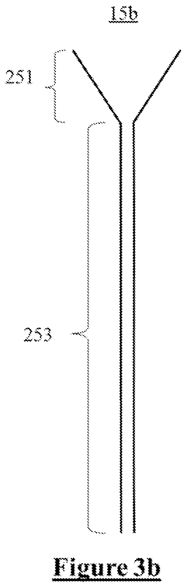

De manière avantageuse, tel qu'illustré sur la figure 3b, l'organe de confinement **15b** peut comporter une portion supplémentaire **251,** localisée en amont d'une portion de diamètre constant **253.** Cette portion supplémentaire **251** présente la forme d'un entonnoir et est destinée à guider la poudre **12a** pour l'amener en contact avec les fils et/ou rubans en déplacement et ce, de façon synchronisée pour obtenir une quantité de poudre imprégnée la plus régulière possible le long du fil ou support. En effet, en plus de l'effet d'imprégnation recherché, il est préférable d'obtenir un taux de poudre constant sur toute la longueur du support imprégné. Pour cela, le débit du doseur de poudre peut avantageusement être régulé, et l'organe de confinement ne doit préférentiellement pas accumuler de poudre, pour éviter une dérive ou des variations de l'imprégnation.

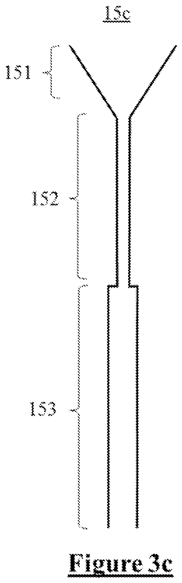

En variante, tel qu'illustré sur la figure 3c, l'organe de confinement **15c** peut présenter une portion **151** en forme d'entonnoir, une deuxième portion de diamètre constant **152** et une troisième portion **153** de diamètre plus large que la deuxième portion **152.**

La section de l'organe de confinement **15a-15c** peut adopter plusieurs géométries. A titre d'exemple, la section peut être ronde, oblongue, carrée, rectangulaire ou encore ovale.

Ces géométries dépendent principalement de la présentation et des caractéristiques des supports à imprégner. Les fils, les fils assemblés, les rovings, vont plutôt nécessiter des sections rondes. Les tresses, rubans, tissés, vont plutôt nécessiter des sections oblongues ou rectangulaires. Ces sections de formes allongées sont aussi bien adaptées au traitement de plusieurs fils ou matières en parallèle. Cette mise en parallèle de matières filiformes ou de faible largeur permet avantageusement de traiter d'avantage de supports simultanément.

La forme de la section de l'organe de confinement **15a-15c** a un effet sur l'intensité du champ électrique présent au niveau de la zone de circulation de la poudre et du support à traiter.

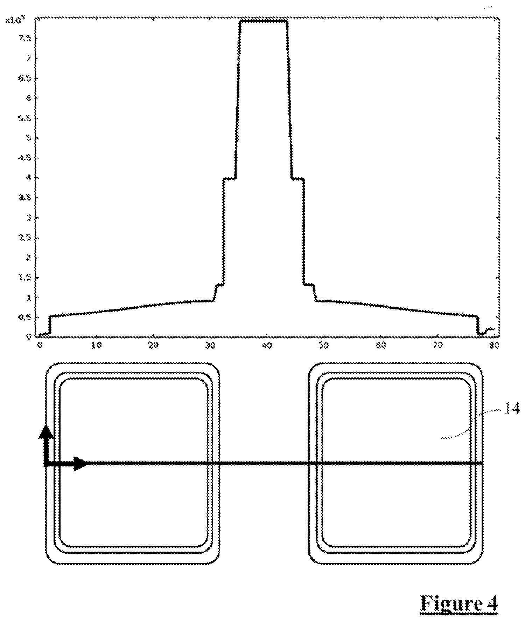

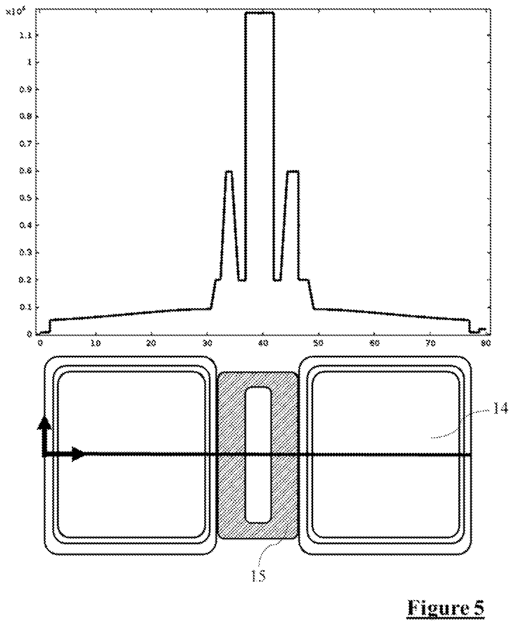

En effet, dans l'exemple tel qu'illustré sur la figure 4, lorsqu'aucun organe de confinement **15** n'est positionné entre les électrodes **14,** le champ électrique entre les électrodes est de 8×10⁵ V/m pour une tension de 10kV sinusoïdale appliquée sur les électrodes. Tel qu'illustré sur la figure 5, lorsqu'un organe de confinement **15** est positionné entre les électrodes **14,** le champ atteint 12×10⁵ V/m. L'organe de confinement **15** de section rectangulaire ou oblongue permet donc d'augmenter le champ électrique de 50% par rapport à la valeur initiale. Il a été constaté que l'organe de confinement n'agit alors pas seulement comme un volume clos dans lequel la poudre et la fibre se mettent en mouvement pour se mélanger, mais aussi comme un amplificateur pour l'efficacité du traitement. Il est ainsi possible d'atteindre des vitesses d'imprégnation jusqu'à environ 100m/min pour réaliser le traitement.

Une interface **21** permet de contrôler l'installation d'imprégnation **100,** par exemple la vitesse de déplacement du support à traiter **11a** dans l'organe de confinement **15,** la vitesse de délivrance en poudre **12a** ou encore la tension délivrée par le générateur de tension alternative **22.**

Pour conclure, l'invention est une installation permettant d'imprégner de manière homogène et en continu des supports tels que des rubans ou des fils, avec une grande efficacité de vitesse de production et de qualité obtenue.

## Revendications

1. Installation d'imprégnation (100) de poudre (12a) sur au moins un support à traiter (11a) de type fil et/ou ruban comprenant :
- un organe de délivrance de la poudre (13, 17, 25) ;
- un organe d'alimentation en support à traiter (18a, 19a, 19b, 23, 24) ;
- au moins deux électrodes (14) reliées à un générateur de courant alternatif (22) aptes à créer un champ électrique alternatif au niveau de l'espace formé entre lesdites électrodes (14) ; et
- une zone de circulation de la poudre et du support à traiter (11a) s'étendant au moins dans la zone où règne le champ électrique alternatif, **caractérisée en ce que:**
- l'installation d'imprégnation (100) comporte en outre un organe de confinement (15) présentant un orifice d'entrée du support à traiter (11a) et de la poudre (12a), un orifice de sortie du support imprégné (11b) et une section de contour fermé depuis l'orifice d'entrée jusqu'à l'orifice de sortie ; la zone de circulation étant formée par le volume intérieur dudit organe de confinement (15) ; et
- l'organe de confinement (15) est fixe par rapport à au moins une des électrodes (14) ; le support à traiter (11a) et la poudre (12a) étant mobiles, dans la zone de circulation, entre l'orifice d'entrée et l'orifice de sortie dudit organe de confinement (15).

2. Installation d'imprégnation selon la revendication 1, **caractérisée en ce que** l'installation comprend deux électrodes (14) placées en regard l'une de l'autre.

3. Installation d'imprégnation selon la revendication 1 ou 2, **caractérisée en ce que** le support forme l'une des deux électrodes.

4. Installation d'imprégnation selon la revendication 1 à 3, **caractérisée en ce qu'**une portion de l'organe de confinement (15) dépasse de l'espace formé entre les électrodes (14) de sorte à permettre la mise en contact de la poudre (12a) et du support à traiter (11a).

5. Installation d'imprégnation selon l'une des revendications 1 à 4, **caractérisée en ce que** l'organe de confinement (15) est un tube de section circulaire.

6. Installation d'imprégnation selon l'une des revendications 1 à 4, **caractérisée en ce que** l'organe de confinement (15) est un tube de section oblongue.

7. Installation d'imprégnation selon l'une des revendications 1 à 4, **caractérisée en ce que** l'organe de confinement (15) est un tube de section rectangulaire.

8. Installation d'imprégnation selon l'une des revendications 1 à 7, **caractérisée en ce que** l'organe de confinement (15) présente au moins deux portions (152, 153) de section différente.

9. Installation d'imprégnation selon l'une des revendications 1 à 8, **caractérisée en ce que** l'organe de confinement (15) est réalisé dans un matériau dont la permittivité diélectrique relative est supérieure ou égale à 2.

10. Installation d'imprégnation selon l'une des revendications 1 à 9, **caractérisée en ce que** l'organe de confinement (15) est réalisé dans un matériau compris dans le groupe comprenant le verre ou le quartz ou la céramique.

11. Installation d'imprégnation selon l'une des revendications 1 à 10, **caractérisée en ce que** l'organe de confinement (15) est orienté verticalement.

## Patentansprüche

1. Imprägnieranlage (100) für Pulver (12a) auf mindestens einem zu bearbeitenden Trägermaterial (11a) vom Typ Draht und/oder Band, die folgendes umfasst:
- ein Organ zur Abgabe von Pulver (13, 17, 25) ;
- ein Organ zur Zufuhr des zu bearbeitenden Trägermaterials (18a, 19a, 19b, 23, 24);
- mindestens zwei Elektroden (14), die mit einem Wechselstromgenerator (22) verbunden sind, der in der Lage ist, ein elektrisches Wechselfeld in dem zwischen den Elektroden (14) gebildeten Raum zu erzeugen; und
- eine Zirkulationszone für das Pulver und das zu bearbeitende Trägermaterial (1 1a), die sich zumindest in dem Bereich erstreckt, in dem sich das elektrische Wechselfeld befindet, ***dadurch gekennzeichnet,* dass**:
- die Imprägnieranlage (100) außerdem ein Umhüllungsorgan (15) umfasst, das eine Einlassöffnung für das zu bearbeitende Trägermaterial (11a) und das Pulver (12a), eine Auslassöffnung für das imprägnierte Trägermaterial (11b) und einen Abschnitt mit geschlossener Kontur von der Einlassöffnung bis zur Auslassöffnung aufweist; wobei die Zirkulationszone durch das Volumen im Umhüllungsorgan (15) gebildet wird; und
- das Umhüllungsorgan (15) in Bezug auf mindestens eine der Elektroden (14) feststehend ist; wobei das zu bearbeitende Trägermaterial (11a) und das Pulver (12a) in der Zirkulationszone zwischen der Einlassöffnung und der Auslassöffnung des Umhüllungsorgans (15) beweglich sind.

2. Imprägnieranlage nach Anspruch 1, **dadurch gekennzeichnet, dass** die Anlage zwei Elektroden (14) umfasst, die einander gegenüberliegend angeordnet sind.

3. Imprägnieranlage nach Anspruch 1 oder 2, **dadurch gekennzeichnet, dass** das Trägermaterial eine der beiden Elektroden bildet.

4. Imprägnieranlage nach Anspruch 1 bis 3, **dadurch gekennzeichnet, dass** ein Teil des Umhüllungsorgans (15) über den zwischen den Elektroden (14) gebildeten Raum hinausgeht, so dass das Pulver (12a) und das zu bearbeitende Trägermaterial (11a) in Kontakt gebracht werden können.

5. Imprägnieranlage nach einem der Ansprüche 1 bis 4, **dadurch gekennzeichnet, dass** das Umhüllungsorgan (15) ein Rohr mit kreisförmigem Querschnitt ist.

6. Imprägnieranlage nach einem der Ansprüche 1 bis 4, **dadurch gekennzeichnet, dass** das Umhüllungsorgan (15) ein Rohr mit länglichem Querschnitt ist.

7. Imprägnieranlage nach einem der Ansprüche 1 bis 4, **dadurch gekennzeichnet, dass** das Umhüllungsorgan (15) ein Rohr mit rechteckigem Querschnitt ist.

8. Imprägnieranlage nach einem der Ansprüche 1 bis 7, **dadurch gekennzeichnet, dass** das Umhüllungsorgan (15) mindestens zwei Abschnitte (152, 153) mit unterschiedlichem Querschnitt aufweist.

9. Imprägnieranlage nach einem der Ansprüche 1 bis 8, **dadurch gekennzeichnet, dass** das Umhüllungsorgan (15) aus einem Material mit einer relativen dielektrischen Permittivitätskonstante von größer oder gleich 2 hergestellt ist.

10. Imprägnieranlage nach einem der Ansprüche 1 bis 9, **dadurch gekennzeichnet, dass** das Umhüllungsorgan (15) aus einem Material aus der Gruppe Glas oder Quarz oder Keramik hergestellt ist.

11. Imprägnieranlage nach einem der Ansprüche 1 bis 10, **dadurch gekennzeichnet, dass** das Umhüllungsorgan (15) vertikal ausgerichtet ist.

## Claims

1. Impregnation installation (100) of powder (12a) on at least one substrate to be treated (11a) of the yarn and/or tape type comprising:
- a powder delivery unit (13, 17, 25);
- a unit supplying the substrate to be treated (18a, 19a, 19b, 23, 24);
- at least two electrodes (14) connected to an alternating current generator (22) and capable of creating an alternating electric field in the space formed between said electrodes (14); and
- a circulation zone of the powder and of the substrate to be treated (11a) extending at least in the zone where the alternating electric field prevails, **characterized in that:**
- the impregnation installation (100) further comprises a containment unit (15) having an inlet orifice for the substrate to be treated (11a) and the powder (12a), an outlet orifice for the impregnated substrate (11b) and a closed contour area from the inlet orifice to the outlet orifice; the circulation zone being formed by the internal volume of said containment unit (15); and
- the confinement unit (15) is fixed with respect to at least one of the electrodes (14); the substrate to be treated (11a) and the powder (12a) being mobile, in the circulation zone, between the inlet orifice and the outlet orifice of said confinement unit (15).

2. Impregnation installation according to claim 1, **characterized in that** the installation comprises two electrodes (14) placed opposite one another.

3. Impregnation installation according to claim 1 or 2, **characterized in that** the substrate forms one of the two electrodes.

4. Impregnation installation according to claim 1 to 3, **characterized in that**a portion of the confinement unit (15) protrudes from the space formed between the electrodes (14) so as to allow the powder (12a) and the substrate to come into contact in order to be treated (Ha).

5. Impregnation installation according to one of claims 1 to 4, **characterized in that** the containment unit (15) is a circular-shaped tube.

6. Impregnation installation according to one of claims 1 to 4, **characterized in that** the containment unit (15) is a circular-shaped tube.

7. Impregnation installation according to one of claims 1 to 4, **characterized in that** the containment unit (15) is a circular-shaped tube.

8. Impregnation installation according to one of claims 1 to 7, **characterized in that** the containment unit (15) has at least two portions (152, 153) of a different area.

9. Impregnation installation according to one of claims 1 to 8, **characterized in that** the confinement unit (15) is made of a material whose relative dielectric permittivity is greater than or equal to 2.

10. Impregnation installation according to one of Claims 1 to 9, **characterized in that** the confinement unit (15) is made of a material included in the group comprising glass or quartz or ceramic.

11. Impregnation installation according to one of Claims 1 to 10, **characterized in that** the confinement unit (15) is oriented vertically.
